# DEMANDE DE BREVET EUROPEEN

(11) **EP 0 652 551 A1**
(43) Date de publication de la demande: **10.05.1995**
(21) Numéro de dépôt: 94402491.8
(22) Date de dépôt: 04.11.1994
(51) Int. Cl.: G11B 5/49, H01F 41/04

(54) **Procédés de réalisation collective de bobinages**

(30) Priorité: 09.11.1993 FR 9313366
(71) Demandeur: THOMSON-CSF, 75008 Paris (FR)
(72) Inventeur: Pirot, François-Xavier, F-92402 Courbevoie Cédex (FR); Jacobelli, Alain-Jackie, F-92402 Courbevoie Cédex (FR)

(57) **Abrégé**

Ce procédé prévoit de réaliser des rainures (4) séparées par des nervures (5) sur au moins une face ou sur les flancs d'une plaquette support (1). Un fil bobinage (8) est bobiné autour de la plaque en passant par les rainures. Le passage d'une rainure à une rainure voisine se fait au-dessus d'une nervure. Le fil est alors maintenu en position (par une colle ou une résine par exemple). Ensuite, on usine la face ou le flanc comportant la nervure au-dessus de laquelle passe le fil lorsqu'il joint une rainure à la suivante. Cet usinage sépare les bobinages des différentes rainures (un bobinage par rainure) et fait apparaître des plages de connexion au fil conducteur par l'accès électrique à chaque conducteur.

Différents modes de réalisation sont prévus.

Application : Réalisation de têtes magnétiques d'enregistrement/lecture et notamment de têtes à commande matricielle.

## Description

L'invention concerne des procédés de réalisation collective de bobinages et notamment la réalisation de pièces bobinées pour têtes magnétiques matricielles d'enregistrement/lecture.

L'objet de l'invention est de réaliser des pièces bobinées devant être utilisées comme pièces inférieures de têtes matricielles d'enregistrement, qui doivent permettre leur fabrication à grande échelle à des coûts inférieurs à ceux pratiqués actuellement. Ces procédés utilisent sous la pièce de ferrite à bobiner une contre pièce usinée ou moulée permettant de mettre en ordre les fils du bobinage et de mettre en relief parmi tous les conducteurs enroulés les quelques fils destinés à être connectés à l'extérieur.

L'invention présente les avantages :
- de permettre un bobinage par enroulement de fils autour d'une pièce sans avoir à faire passer le fil dans des trous ou cavités ;
- de bobiner en une seule opération plusieurs bobinages ;
- de permettre d'obtenir des plages de connexions aisément accessibles.

L'invention concerne donc un procédé de réalisation collective de bobinages, caractérisé en ce qu'il comporte les étapes suivantes :
a) réalisation d'une plaque support comportant au moins sur deux flancs opposés de la plaque et/ou sur deux bords opposés d'une face principale de la plaque, des premières rainures séparées par des nervures, une rainure d'un flanc ou d'un bord de la face étant sensiblement alignées avec une rainure du flanc ou du bord opposé ;
b) bobinage d'un premier fil électrique autour de la plaque en passant successivement par les différentes rainures, le passage d'une rainure à la rainure voisine se faisant au-dessus de la nervure séparant les deux rainures ;
c) maintien en position du fil électrique ;
d) usinage des flancs ou de la face de façon à supprimer les portions de fils situées au-dessus des nervures.

L'invention concerne également un procédé de réalisation collective de bobinages, caractérisé en ce qu'il comporte les étapes suivantes :
a) réalisation d'une plaque support comportant au moins sur deux flancs opposés de la plaque et/ou sur deux bords opposés d'une face principale de la plaque, des premières rainures séparées par des nervures métalliques ou métallisées au moins en partie, une rainure d'un flanc ou d'un bord de la face étant alignée avec une rainure du flanc ou du bord opposé ;
b) bobinage d'un premier fil électrique autour de la plaque en passant successivement par les différentes rainures, le passage d'une rainure à la rainure voisine se faisant au-dessus de la nervure séparant les deux rainures ;
c) soudure du fil, après dénudage si le fil est isolé, aux zones métalliques ou métallisées des nervures au-dessus desquelles passe le fil ;
d) séparation en deux parties des zones, du fil et des soudures.

Les différents objets et caractéristiques de l'invention apparaîtront plus clairement dans la description qui va suivre faite à titre d'exemple et dans les figures annexées qui représentent :
- les figures 1a à 1f, un exemple de procédé de réalisation selon l'invention ;
- les figures 2a à 2l, différents modes de passage d'un fil de bobinage d'une rainure à la rainure voisine et différents modes de prises de connexion ;
- les figures 3a à 3c, un exemple de réalisation d'un dispositif selon l'invention ;
- les figures 4a à 4e, une variante de procédé de réalisation selon l'invention ;
- les figures 5a à 5d, une autre variante de procédé de réalisation selon l'invention ;
- la figure 6, un mode de réalisation collective de plusieurs pièces selon l'invention.

En se reportant aux figures 1a à 1f, on va décrire un premier exemple de réalisation du procédé de l'invention.

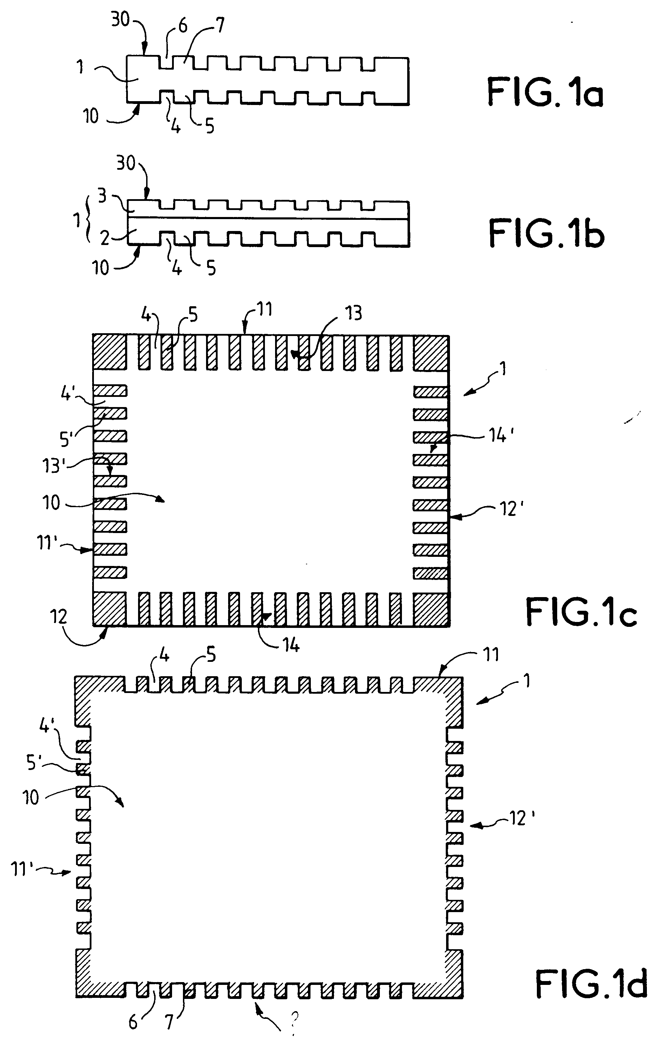

On réalise tout d'abord une plaque 1 qui peut être en un seul matériau de bonne perméabilité magnétique comme celle représentée en figure 1a. La plaque 1 peut être également constituée de deux plaques 2 et 3 accolées (figure 1b). La plaque 2 est alors une plaque support dont les qualités magnétiques importent peu et la plaque 3 est en matériau de bonne perméabilité magnétique. Selon l'exemple de réalisation décrit ci-après, les deux faces 10 et 30 de la plaque 1 comportent des rainures 4 et 6 respectivement séparées par des nervures 5 et 7. Dans le cas de la réalisation de bobinages matriciels, les faces 10 et 30 comportent des rainures et des nervures (non représentées sur les figures 1a et 1b) perpendiculaires aux rainures 4 et 6. De préférence, les rainures des deux faces 10 et 30 correspondent deux à deux. Dans la suite de la description nous nous intéresserons principalement aux rainures et nervures (4, 5) de la face 10.

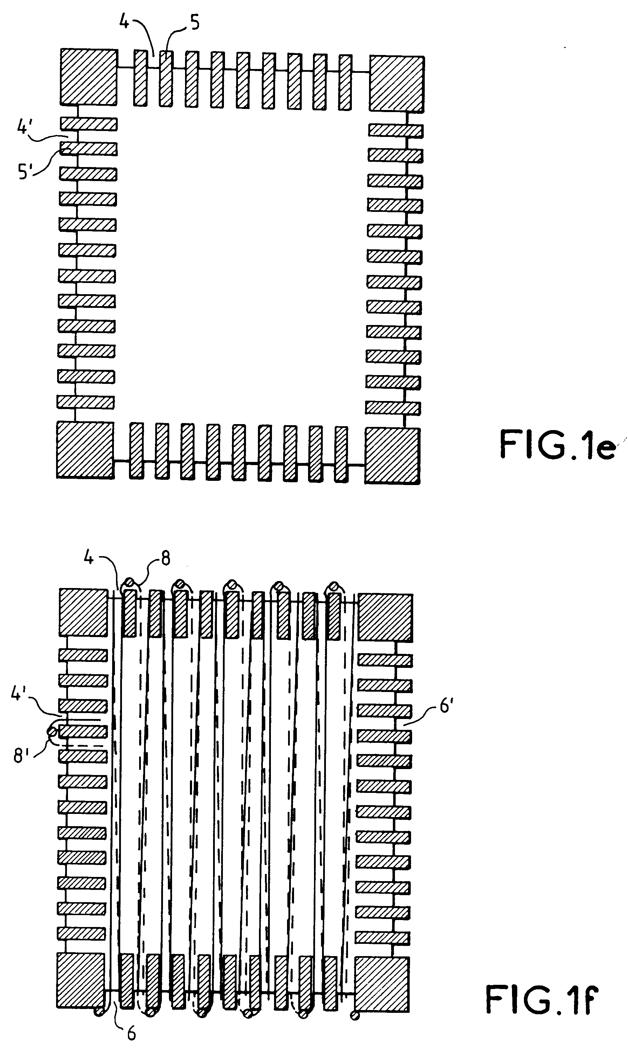

Les figures 1c, 1d, 1e représentent la face 10 en vue de dessous selon différentes formes de réalisation de la pièce 1.

Selon la figure 1c, les nervures telles que 5 ne joignent pas deux flancs 11 et 12 opposés de la plaque 1, elles sont limitées à des zones qui bordent les côtés de la face 10. Sur cette figure on voit les rainures 4' et les rainures 5' perpendiculaires aux rainures 4. Selon une variante de réalisation non représentée, les nervures pourraient joindre les bords opposés de la plaque.

Selon la figure 1d, les rainures et nervures (4, 5, 4', 5') ne sont pas réalisées dans la face 10 ou sur la face 10 mais elles sont réalisées sur les flancs de la plaque 1 et affleurent la face 10.

Selon la figure le les rainures et les nervures (4, 5, 4', 5') sont réalisées à la fois sur la face 10 et sur les flancs de la plaque 1.

Ensuite comme cela est représenté en figure 1f, on bobine un premier fil 8 dans les rainures 4 et 6 puis un deuxième fil 8' est bobiné dans les rainures 4' et 6'.

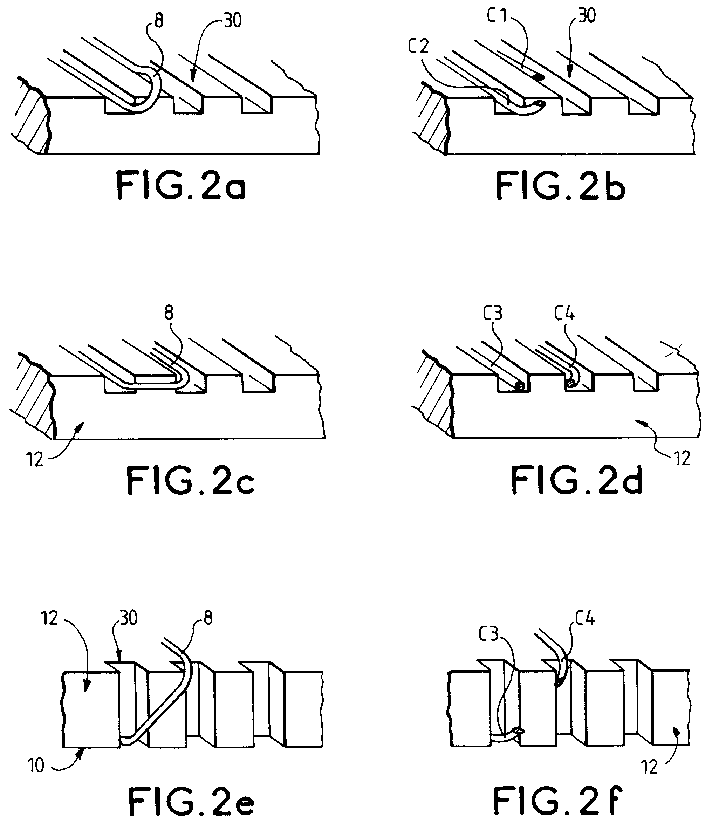

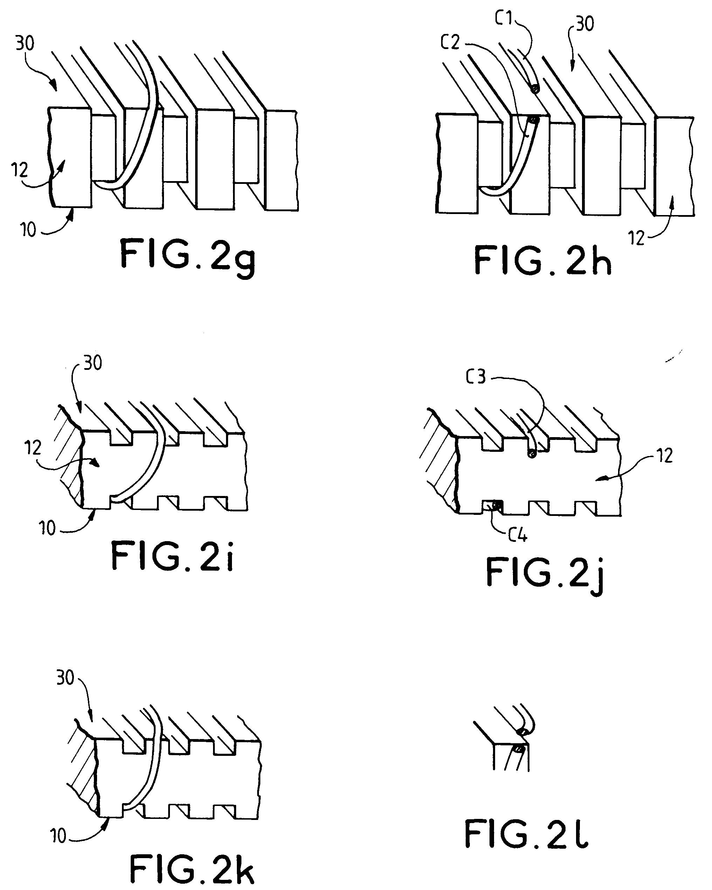

Le passage d'un fil, 8 par exemple, d'une rainure à la rainure voisine peut se faire de différentes façons. Selon les figures 2a et 2b le fil passe d'une rainure à une rainure suivante de la même face 30 du substrat 1 en chevauchant la nervure qui les sépare. Sur la figure 2a, le fil passe d'une rainure à l'autre par le flanc du substrat.

Sur les figures 2e, 2g, 2i et 2k, le fil passe d'une rainure d'une face 30 à la rainure de la face opposée 10. Sur la figure 2e, ce passage se fait en chevauchant une nervure du flanc. Sur la figure 2g le fil chevauche une nervure du flanc et d'une face 30. Sur la figure 2i, le substrat n'a pas de rainure et de nervure sur le flanc et le fil passe d'une rainure d'une face à une rainure d'une autre face en s'appuyant sur le flanc 11. Sur la figure 2k, le fil passe d'une rainure d'une face 10 à une rainure de la face 30 en chevauchant une nervure de la face 30.

Toutes les rainures telles que 4 et 6 sont bobinées avec un fil 8. Dans les figures 2a à 2k, on a représenté un fil par rainure, mais ce fil peut passer plusieurs fois dans la même rainure pour former un bobinage.

Ensuite, éventuellement les rainures telles que 4' et 6' de la figure 1f sont bobinées avec un fil 8'.

Les fils électriques sont maintenus en position par encapsulation dans un matériau liquide ou pâteux et solidification de ce matériau.

Les fils sont immobilisés dans les rainures à l'aide d'une résine. Puis les fils des différentes rainures sont séparés les uns des autres de façon à individualiser les bobinages de chaque rainure. Cela se fait en usinant ou en coupant chaque passage de fil entre deux rainures.

Sur les figures 2b, 2h et 2l, cela se fait en usinant la face du substrat portant des nervures sur lesquelles chevauchent le fil. Cet usinage fait apparaître des sections de fils situées dans le plan de la face 30 du substrat. Si comme cela a été mentionné précédemment, les fils ont été noyés dans de la résine, celle-ci remplit les rainures (ce qui n'est pas représenté sur les figures) et affleure notamment la face 30. La face 30 est alors une surface unie comportant des zones conductrices C1 et C2 auxquelles il est aisé de venir se connecter pour alimenter en courant les fils des rainures.

Sur les figures 2d, 2f et 2j, la séparation des fils des rainures se fait par usinage des flancs. Dans ces conditions on obtient des plages de connexions C3, C4 situées dans le plan du flanc usiné 12.

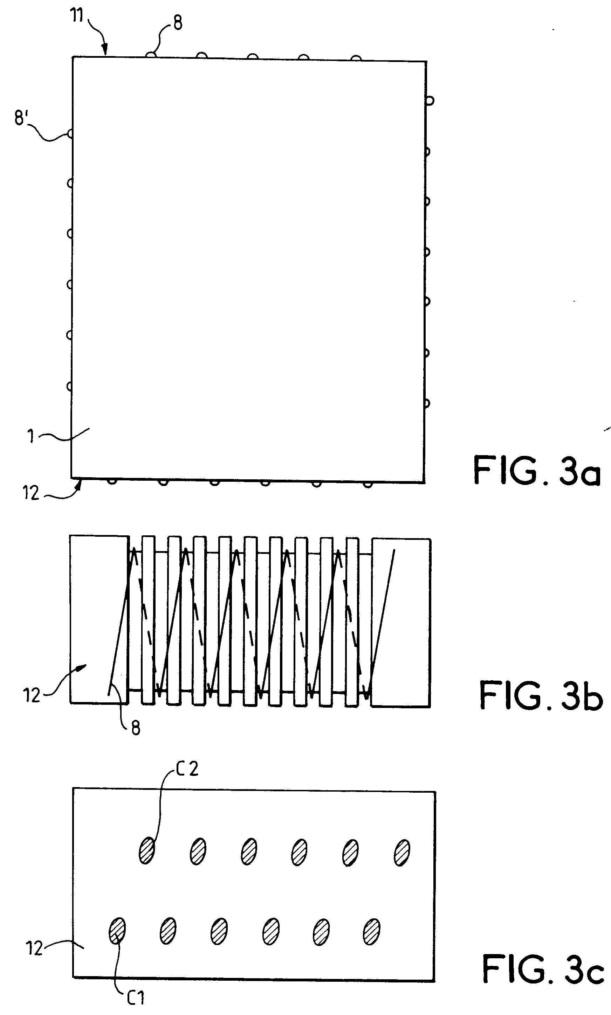

Les figures 3a à 3c représentent un exemple de réalisation conforme au mode de réalisation des figures 2e et 2f. En figures 3a et 3b, le substrat 1 a été bobiné à l'aide de fils 8 et 8'. La figure 3b représente le flanc 12 du substrat après bobinage et avant usinage. Les flancs du substrat sont ensuite usinés. La figure 3c représente le flanc 12 après usinage et on voit sur ces flancs, les sections du fil 8 constituant des plages de connexion C1, C2.

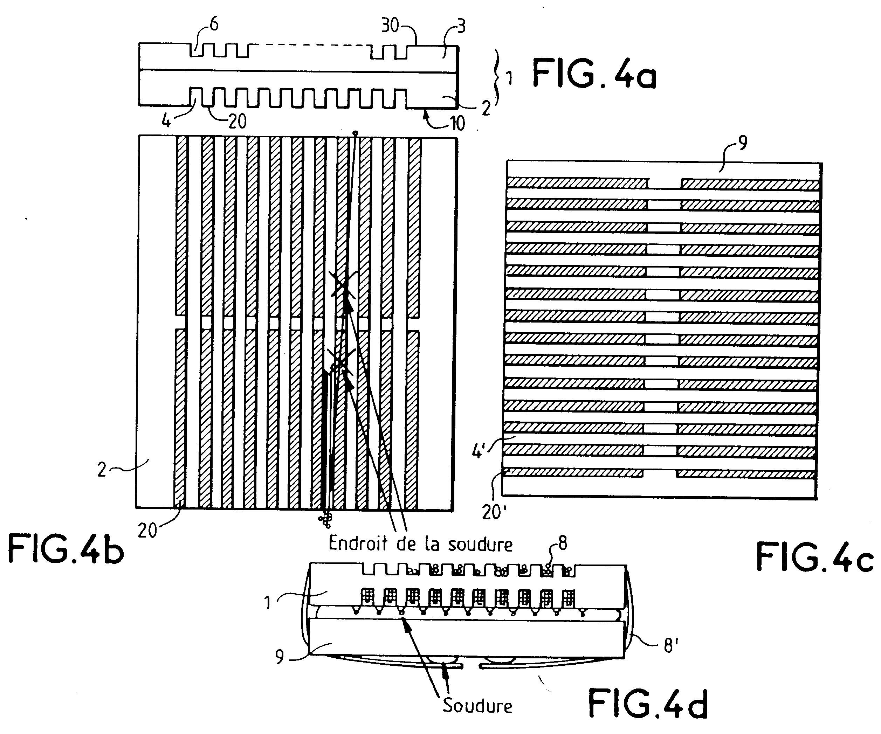

Le dispositif de l'invention peut être moulé, mais également fabriqué par rainurage à la scie dans une céramique du type substrat hybride, ou dans un circuit imprimé métallisé sur une face. Notons qu'il n'est pas nécessaire de graver la couche conductrice préalablement au rainurage, les différents traits de scie avant et après bobinage définissant les pistes conductrices de manière suffisante. Comme cela a été décrit en relation avec la figure 1b, le substrat 1 peut être en deux parties 2 et 3 accolées. Les figures 4a à 4d représentent un mode de réalisation détaillé selon l'invention. Une pièce 2 porte des pistes conductrices séparées par des rainures 5. Elle est accolée à la pièce de ferrite 3 (possibilité également de métallisation et rainurage du dos du ferrite). L'alignement entre la face avant 30 et la face arrière 10 doit être telle qu'un fil passant dans le rainurage ferrite 6 s'installe naturellement dans le rainurage 4 de la face inférieure lors du bobinage. Un alignement de l'ordre de 10 % du pas de rainurage doit être suffisant. Notons également que cette première étape de collage peut être réalisée de manière collective sur plusieurs bobinages encore réunis en un seul substrat, ce qui simplifie l'étape d'alignement. La précision de cette étape d'alignement est compatible avec la visualisation des faces supérieures et inférieures des pièces par deux loupes binoculaires préalablement alignées en elles. Enfin notons que les pièces peuvent être découpées en barrettes, et le premier bobinage effectué sur celles-ci, économisant du temps de mise en place.

Une fois ce collage réalisé, il est possible de bobiner le fil sur l'assemblage. Le passage d'une rainure à l'autre est effectué sur la face de la contre pièce, le fil passant par dessus la partie métallisée (voir figure 4b). Le dénudage du fil a été effectué au vol. Une fois tous les tours de toutes les rainures 4, 6 de ce sens bobinés, il suffit de souder le fil sur la plus grande longueur possible à la partie métallique 20' des nervures sous-jacente puis de donner un coup de scie de profondeur maîtrisée afin de séparer les connexions de deux bobinages voisins. A ce point, tous les bobinages d'une direction sont enroulés et connectés.

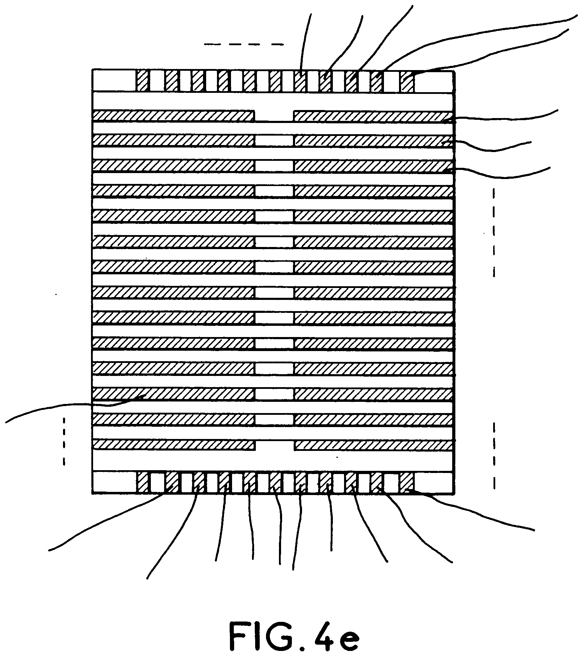

L'étape suivante consiste à réaliser les enroulements dans la direction perpendiculaire. Une seconde contre pièce 9 est empilée et est collée sur la pièce 2, contre la pièce 10. Sa dimension étant telle qu'il est possible d'accéder au bord des conducteurs couche mince de la première pièce 2. La pièce 9 possède également des rainures 4' séparées par des nervures conductrices 20'. Comme représenté en figure 4d, l'ensemble est bobiné à l'aide d'un fil 8'. La même procédure d'enroulement est utilisée pour cette seconde direction de bobinage. Le composant est alors prêt à être soudé par une méthode classique (ultrasons, ball bonding) sur un substrat de circuit intégré comme cela est représenté en figure 4e.

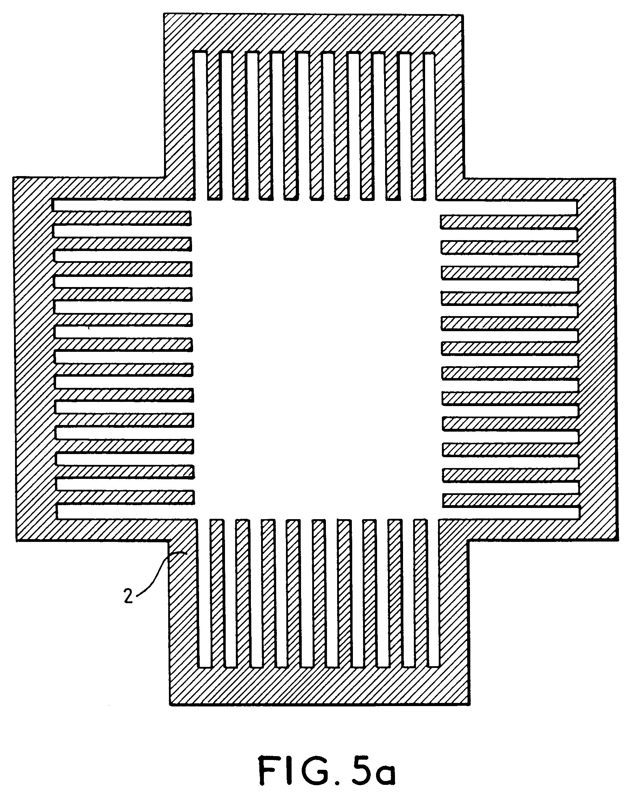

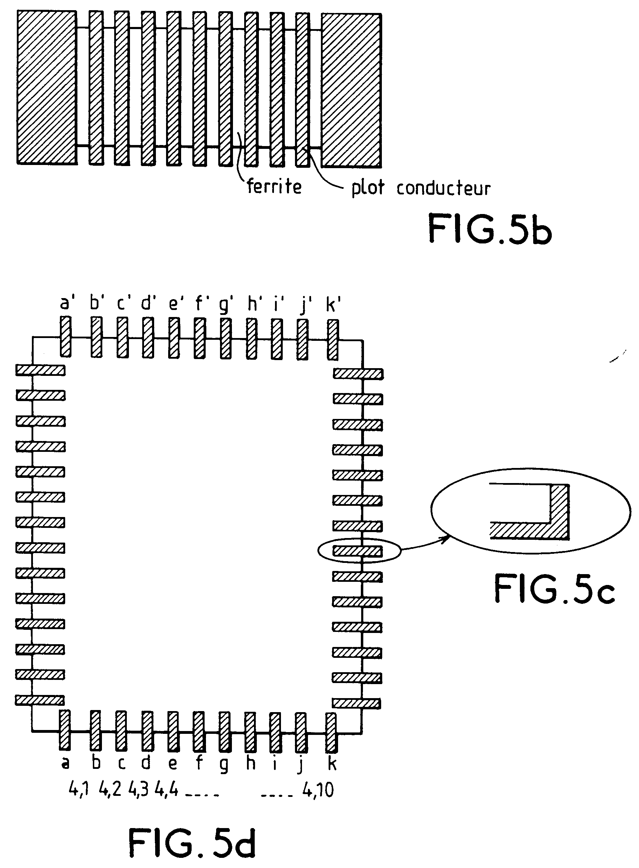

Selon une variante de réalisation de l'invention, on utilise une pièce 2 en matériau métallique ou métallisé (figure 5a) éventuellement renforcée par un polymère de sous-couche. Cette pièce 2 est formée par estampage. Sur chaque pièce 2 est placée une pièce en ferrite 3 puis les pattes de la grille sont recourbées sur le ferrite et cassées au ras de la partie supérieure (figures 5b à 5d). C'est l'épaisseur de la pièce métal/polymère qui permet d'ordonner les fils en formant un peigne. Le passage d'une rainure à une autre s'effectue sur la tranche donc au-dessus du conducteur cuivre. Si la soudure des fils est faite au vol, c'est-à-dire que l'on bobine avec le fil distribué à travers une machine de soudure type "ball bonding", l'ordre de bobinage est évident. Si l'on bobine en continu, l'ordre de bobinage est un peu plus complexe : une rainure sur deux est bobinée par un fil, puis une rainure sur deux par un second fil. Cette méthode laisse une fraction de fil mort dans chaque rainure d'un côté du composant. Par exemple :
- partant de a (figure 5d) :
   . rainure 4.1, n tours, passage par b',
   . rainure 4.2, 1/2 tour face inférieure, passage par c
   . rainure 4.3, n tours, d'
      etc...
- puis en partant de a' :
   . rainure 4.1, 1/2 tour, b
   . rainure 4.2, n tours, c', etc... Les deux fils peuvent d'ailleurs être bobinés simultanément).

Par la suite, le fil dénudé est soudé sur la tranche du composant; cela est même possible à la vague. Puis, chaque bobinage est séparé d'un trait de scie sur la tranche. Il reste donc un fil mort dans chaque rainure (le 1/2 tour ci-dessus). L'avantage de cette méthode est que le composant final possède une face arrière plane, avec des contacts prêts à souder, éventuellement en flip chip.

Selon une variante de réalisation, les bobinages peuvent être réalisés de telle façon que le transfert d'une rainure à l'autre s'effectue une fois sur la tranche d'un côté du composant, la fois suivante de l'autre côté, ce qui a été représenté en figure 1f par les traits pleins ou pointillés. Sur cette figure 1f, sur la vue de côté, ne sont représentés que les fils hors rainure ; le nombre de tours de bobinage peut être de n'importe quelle valeur compatible avec le diamètre du fil et la dimension des rainures. Notons qu'à nouveau le premier bobinage peut être fait en barrette. Notons que le nombre de tours doit être adapté, entre les rainures paires et impaires, afin de conserver le même nombre de conducteurs sur la face qui active les pôles des têtes magnétiques de la partie en ferrite. Comme mentionné précédemment, une fois le bobinage effectué, la pièce est encapsulée dans un polymère, puis reprise par un léger polissage ou usinage sur les quatre tranches, jusqu'à apparition des conducteurs. Il est alors nécessaire d'assurer les connexions sur la tranche. Par exemple, sur la figure 3c tous les conducteurs du haut peuvent par exemple être connectés ensemble afin d'assurer une masse commune, les contacts du bas étant pris par sertissage dans un peigne. Le pas des conducteurs à connecter est alors la moitié du pas des rainures.

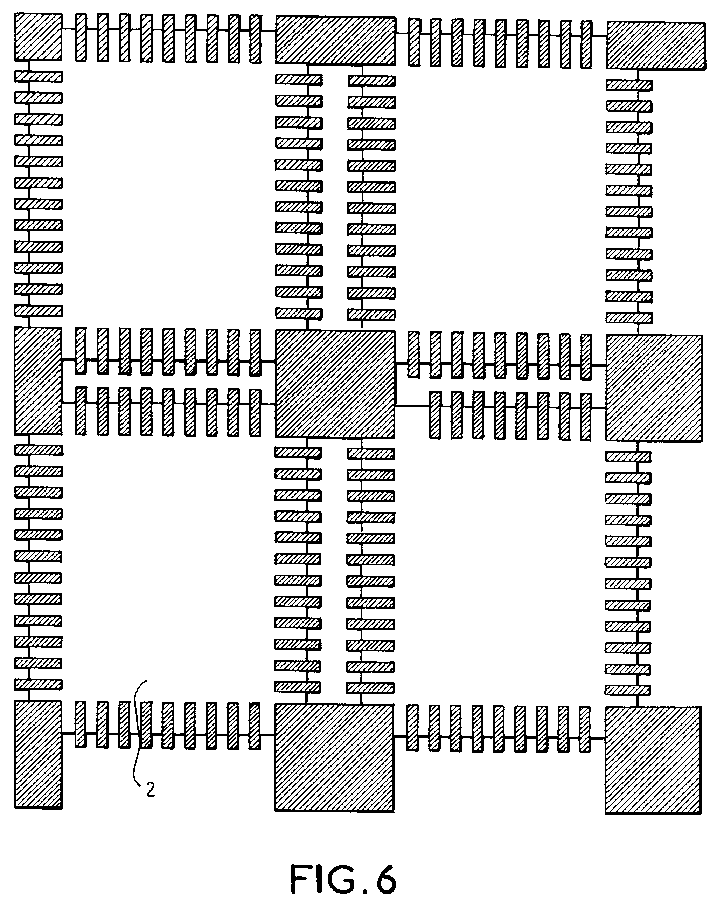

La figure 6 représente une forme de réalisation collective de plusieurs pièces telle que celle de la figure 1e.

## Revendications

1. Procédé de réalisation collective de bobinages, caractérisé en ce qu'il comporte les étapes suivantes :
a) réalisation d'une plaque support (1) comportant au moins sur deux flancs opposés (11, 12) de la plaque et/ou sur deux bords opposés (13, 14) d'une face principale (10) de la plaque, des premières rainures (4) séparées par des nervures (5), une rainure (4) d'un flanc ou d'un bord de la face étant sensiblement alignées avec une rainure (6) du flanc ou du bord opposé ;
b) bobinage d'un premier fil électrique (8) autour de la plaque en passant successivement par les différentes rainures, le passage d'une rainure à la rainure voisine se faisant au-dessus de la nervure séparant les deux rainures ;
c) maintien en position du fil électrique ;
d) usinage des flancs ou de la face de façon à supprimer les portions de fils situées au-dessus des nervures.

2. Procédé de réalisation collective de bobinages, caractérisé en ce qu'il comporte les étapes suivantes :
a) réalisation d'une plaque support (1) comportant au moins sur deux flancs opposés (11, 12) de la plaque et/ou sur deux bords opposés (13, 14) d'une face principale (10) de la plaque, des premières rainures (4) séparées par des nervures (5) métalliques ou métallisées au moins en partie, une rainure d'un flanc ou d'un bord de la face étant alignée avec une rainure (6) du flanc ou du bord opposé ;
b) bobinage d'un premier fil électrique (8) autour de la plaque en passant successivement par les différentes rainures, le passage d'une rainure à la rainure voisine se faisant au-dessus de la nervure séparant les deux rainures ;
c) soudure du fil, après dénudage si le fil est isolé, aux zones métalliques ou métallisées des nervures au-dessus desquelles passe le fil ;
d) séparation en deux parties des zones, du fil et des soudures.

3. Procédé selon l'une des revendications 1 ou 2, caractérisé en ce que lors de la troisième étape (c) le maintien en position du fil électrique se fait par encapsulation dans un matériau liquide ou pâteux et solidification de ce matériau.

4. Procédé selon l'une des revendications 1 ou 2, caractérisé en ce que la plaque est parallélépipédique
- au cours de la première étape (a), des deuxièmes rainures (4') séparées par des nervures (5') sont réalisées sur les deux autres flancs (11', 12') de la plaque ou sur les deux autres bords opposés (13', 14') de la face (10) de la plaque (1), ces deuxièmes rainures (4') étant orthogonales aux premières rainures (4) ;
- entre les deuxième et troisième étapes (b et c) est prévue une étape supplémentaire, similaire à la deuxième étape de bobinage d'un deuxième fil (8') dans les deuxièmes rainures (4').

5. Procédé selon l'une des revendications 1, 2 ou 3, caractérisé en ce qu'il comporte une cinquième étape de prise de contact sur les sections de fils mises à jours lors de l'usinage réalisé à la quatrième étape.

6. Procédé selon l'une des revendications 1 ou 2, caractérisé en ce que la plaque support comporte sur l'une de ses faces principales, une couche d'un matériau possédant une bonne perméabilité magnétique et que cette couche possède des rainures dans lesquelles passent lesdits fils électriques.

7. Procédé selon la revendication 1, caractérisé en ce que durant la deuxième étape (b) le passage du fil électrique d'une rainure à la rainure voisine se fait au-dessus d'une portion d'une nervure, laquelle portion est localisée sur le bord de la face principale de la plaque.

8. Procédé selon la revendication 2, caractérisé en ce qu'il comporte après les quatre étapes a à c, les étapes suivantes :
e) réalisation d'une plaque de bobinage comportant au moins sur deux flancs opposés de la plaque et/ou sur deux bords opposés d'une face principale de cette plaque des deuxièmes rainures séparées par des nervures métalliques ou métallisées au moins en partie, une rainure d'un flanc ou d'un bord de la face étant alignées avec une rainure du flanc ou du bord opposé ;
f) empilement de la plaque support et de la plaque de bobinage de telle façon que :
- si la plaque support comporte une face avec nervures auxquelles sont soudées des fils, la plaque de bobinage est plaquée à cette face ;
- si la plaque de bobinage comporte une face avec des nervures métalliques ou métallisées, la face qui lui est opposée est celle qui est appliquée à la plaque support, l'empilement étant réalisé de telle façon que les nervures de la plaque support et celles de la plaque de bobinage soient orthogonales ;
g) bobinage d'un deuxième fil électrique autour de l'empilement des deux plaques en passant successivement par les différentes rainures, le passage d'une rainure à la rainure voisine se faisant au-dessus d'une zone de la nervure séparant les deux rainures ;
h) soudure du deuxième fil, après dénudage s'il est isolé, aux zones métalliques ou métallisées des nervures au-dessus desquelles passe le fil ;
i) séparation en deux parties des zones, du deuxième fil et des soudures de la plaque de bobinage.

9. Procédé selon la revendication 2, caractérisé en ce que la deuxième étape (b) prévoit le bobinage des rainures de rangs impairs à l'aide du premier fil puis le bobinage des rainures de rangs pairs à l'aide d'un autre fil.

10. Procédé selon l'une des revendications 1 ou 2, caractérisé en ce que le passage du fil d'une rainure à la rainure suivante se fait alternativement sur un flanc de la plaque ou un côté de la face et sur l'autre flanc ou l'autre côté.
